(19) Europäisches Patentamt
European Patent Office
Office européen des brevets

(11) **EP 4 436 922 B1**

(12) **EUROPEAN PATENT SPECIFICATION**

(45) Date of publication and mention
of the grant of the patent:
**13.08.2025 Bulletin 2025/33**

(21) Application number: **22822890.4**

(22) Date of filing: **24.11.2022**

(51) International Patent Classification (IPC):
**C01B 32/158** (2017.01)     **C01B 32/162** (2017.01)
**C01B 32/174** (2017.01)

(52) Cooperative Patent Classification (CPC):
**C01B 32/158; C01B 32/162; C01B 32/174;**
**Y02E 60/10**

(86) International application number:
**PCT/EP2022/083188**

(87) International publication number:
**WO 2023/094550 (01.06.2023 Gazette 2023/22)**

(54) **CARBON NANOTUBE DISPERSION, METHOD FOR OBTAINING IT AND USE OF IT IN ELECTRODE MATERIALS**

KOHLENSTOFF-NANORÖHREN-DISPERSION, VERFAHREN ZU IHRER VERSTELLUNG UND VERWENDUNG IN ELEKTRODENMATERIALIEN

DISPERSION DE NANOTUBES DE CARBONE, METHODDE POUR L'OBTENIR ET SON UTILISATION DANS DES MATERIAUX POUR ELECTRODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021 EP 21210789**

(43) Date of publication of application:
**02.10.2024 Bulletin 2024/40**

(73) Proprietor: **Nanocyl S.A.**
**5060 Sambreville (BE)**

(72) Inventors:
• **CHAN, Fang-Yue**
**5590 Achêne (BE)**
• **HERMOSO LIMON, Juan**
**1000 Bruxelles (BE)**
• **JORIS, Jean-Philippe**
**1040 Etterbeek (BE)**

(74) Representative: **AWA Benelux**
**Parc d'affaires Zénobe Gramme - Bât. K**
**Square des Conduites d'Eau 1-2**
**4020 Liège (BE)**

(56) References cited:
**EP-A1- 3 786 110     US-A1- 2007 224 106**

• **NGUYEN MY ANH ET AL: "Synthesis of single-walled carbon nanotubes over Co-Mo/Al 2 O 3 catalyst by the catalytic chemical vapor deposition of methane", vol. 4, no. 3, 1 July 2013 (2013-07-01), pages 035018, XP055919232, Retrieved from the Internet <URL:https://www.researchgate.net/profile/Thang-Van-Le/publication/258311338_Synthesis_of_single-walled_carbon_nanotubes_over_Co-MoAl2O3_catalyst_by_the_catalytic_chemical_vapor_deposition_of_methane/links/53d218320cf228d363e90799/Synthesis-of-single-walled-carbon-nanotubes-over-Co-Mo-Al2O3-catalyst-by-t> DOI: 10.1088/2043-6262/4/3/035018**

- ESTEVES LAURA M. ET AL: "CATALYST PREPARATION METHODS TO REDUCE CONTAMINANTS IN A HIGH-YIELD PURIFICATION PROCESS OF MULTIWALLED CARBON NANOTUBES", vol. 36, no. 4, 1 October 2019 (2019-10-01), BR, pages 1587 - 1600, XP055919237, ISSN: 0104-6632, Retrieved from the Internet <URL:https://www.scielo.br/j/bjce/a/hFygSDwSqJsCYy5HWGysRzN/?lang=en&format=pdf> DOI: 10.1590/0104-6632.20190364s20190251

**Description**

**Field of the Invention**

The present invention relates to a carbon nanotube dispersion, more particularly to a stable multi-walled carbon nanotube dispersion, excellent in dispersibility of carbon nanotubes and storage. The present invention also relates to a method for preparing said dispersion and to a battery electrode mixture layer for a lithium ion secondary battery containing such a battery electrode mixture layer.

**State of the Art**

Carbon nanostructures (CNSs) refer collectively to nanosized carbon structures having various shapes, such as nanotubes, nanohairs, fullerenes, nanocones, nanohorns, and nanorods. Carbon nanostructures can be widely utilized in a variety of technological applications because they possess excellent characteristics.

Carbon nanotubes (CNTs) are tubular materials consisting of carbon atoms arranged in a hexagonal pattern and have a diameter of approximately 1 to 100 nm. Carbon nanotubes exhibit insulating, conducting or semi-conducting properties depending on their inherent chirality. Carbon nanotubes have a structure in which carbon atoms are strongly covalently bonded to each other. Due to this structure, carbon nanotubes have a tensile strength approximately 100 times greater than that of steel, they are highly flexible and elastic, and are chemically stable

Carbon nanotubes are divided into three types: single-walled carbon nanotubes (SWCNTs) consisting of a single sheet and having a diameter of about 1 nm; double-walled carbon nanotubes (DWCNTs) consisting of two sheets and having a diameter of about 1.4 to about 3 nm; and multi-walled carbon nanotubes (MWCNTs) consisting of three or more sheets and having a diameter of about 5 to about 100 nm.

Depending on their diameter, length, and chirality, carbon nanotubes may exhibit unique optical, electrical, thermal, and mechanical properties.

However, the advantageous properties of carbon nanotubes are often unrealized on a macroscopic level for several reasons. The first reason is a tendency of carbon nanotubes to crystallize in rope-like structures which become entangled into networks. Strong Van-der-Waals interactions between two carbon nanotubes lead to their alignment and to their consequent packing into ropes. This aggregation of carbon nanotubes often adversely affects both their electrical and mechanical behavior. The second reason is the insolubility or poor dispersion of carbon nanotubes in common organic solvents and polymer matrixes.

In order to address these problems, researchers have developed many methods for preparing uniform and stable carbon nanotube dispersions.

JP 2016514080 A, relates to a dispersion liquid containing a dispersion liquid medium, a polymer dispersion aid, and carbon nanotubes dispersed in the dispersion liquid medium. The dispersion liquid is selected from the group of water, acetone, nitrile, alcohol, dimethylformamide, N-methylpyrrolidone, pyrrolidone derivative, butyl acetate, methoxypropyl acetate, alkylbenzene, cyclohexane derivative and mixtures thereof; poly (vinylpyrrolidone) is disclosed as the dispersion aid among a wide variety of different polymers.

CN 104795570 A, relates to a composite conductive paste comprising between 4.0 and 5.0 parts of carbon nanotubes, between 0.5 and.5 parts of reduced expanded graphite, between 0.3 and 1.2 parts of polyvinylpyrrolidone, between 88 and 93 parts of N-methyl pyrrolidone and between 0.001 and 0.01 part of a complexing agent, wherein the complexing agent is at least one of ethylenediaminetetraacetic acid, sulfosalicylic acid, and acetylacetone.

EP 3816103 A1, relates to a carbon nanotube dispersion, comprising a carbon nanotube, a solvent, such as an amide-based organic solvent such as N-methyl-2-pyrrolidone and N-ethyl-2-pyrrolidone , and a dispersant such as polyvinylpyrrolidone.

US 7682590 A1, relates to a mixture of an amide-based organic solvent and a polyvinylpyrrolidone for dispersing a carbon nanotube.

US 2011301251 A1, relates to a dispersible single-walled and multi-walled carbon nanotubes prepared by dissolving surfactants in a solvent to form a solution; adding carbon nanotubes to the solution to form a mixture, wherein the surfactant comprises polyvinylpyrrolidone, and wherein the solvent may be N-methylpyrrolidone.

JP2005162877 A, discloses a carbon nanotube dispersion solution consisting of carbon nanotubes, an amide-based polar organic solvent, and polyvinylpyrrolidone, wherein the amide-based polar organic solvent is N-methylpyrrolidone (NMP).

JP2008138039 discloses a carbon nanofiber dispersion comprising an amide-based organic solvent, an amine-compound and a polymer which is polyvinylpyrrolidone, a copolymer of vinylpyrrolidone and vinylacetate, a copolymer of vinylpyrrolidone and vinylimidazole, or a copolymer of vinylpyrrolidone and vinylcabrolactam, or a combination thereof. The amide-based organic solvent, is selected from dimethylformamide, diethylformamide, dimethylacetamide, N-methylpyrrolidone and the like, while the amine-based compound is selected from 2-methylaminoethanol, 2-aminoethanol, isopropanolamine, n-propylamine, 2-ethoxyethylamine, ethanolamine and the like.

JP 2015072899 (A) discloses a carbon fiber dispersion liquid containing a polymer-based dispersant, the polymer being selected from a cellulose derivative, polyvinylpyrrolidone, polyvinyl alcohol, polyvinyl acetal, and polyamic acid salt, or a mixture of two or more thereof. The dispersion liquid further may comprise N-methyl-2-pyrrolidone and an amine compound such as trimethylamine.

EP 3786110 (A1) discloses a carbon nanotube dispersion having N-methyl-2-pyrrolidone as a solvent and having excellent viscosity, dispersibility, and storage stability despite having a high carbon nanotube concentration, and providing a cell electrode composite layer having uniform and satisfactory coating film properties and low electrode plate resistance. The carbon nanotube dispersion is characterized by containing carbon nanotubes, polyvinylpyrrolidone, N-methyl-2-pyrrolidone, and an amine compound as a dispersing auxiliary. The carbon nanotube dispersion contains from 10 parts by weight to less than 25 parts by weight of polyvinylpyrrolidone and from 2 parts by weight to 10 parts by weight of an amine-based compound with respect to 100 parts by weight of the carbon nanotubes. The amine-based compounds are selected from the group consisting of an aliphatic primary amine, an aliphatic secondary amine, an aliphatic tertiary amine, an amino acid, an alkanolamine, a polyoxyalkylene alkylamine, a polyamine, and a nitrogen-containing alicyclic heterocyclic compound. The alkanolamines, as disclosed in the description, are dimethylaminoethanol, monoethanolamine, diethanolamine, methyldiethanolamine, and triethanolamine.. The influence of iron-free catalytic remnants on the dispersion process of MWCNT's, containing said remnants, and on the final viscosity of the MWCNT dispersion is not dealt with.

Carbon nanotubes have attracted attention as potential electrode backbone or buffer materials in lithium batteries.

Typical lithium-ion batteries utilize carbon anodes (negative electrode) and lithiated transition metal oxide cathodes (positive electrode) situated on opposite sides of a microporous polymer separator.

A lithium-ion cell begins life with all of the lithium in the cathode and upon charging, a percentage of this lithium is moved over to the anode and intercalated within the carbon anode.

A failure in lithium-ion batteries is the result of a formation of dendrites within the battery. Dendrites are microscopic metal deposits that can form within the cell. Dendrite formation generally begins in the anode and creates an internal shortcut when it extends through the separator to the cathode.

When iron impurities from any electrode dissolve in the electrolyte, there is a significant risk that these impurities migrate on the anode side and initiate dendrite growth by deposition. Because of this, iron-free materials are required as electrode material.

When using MWCNT's as electrode material, the risk of battery failure caused by those dendrites arises.

Consequently, MWCNT's comprising interstitial iron-components obtained by a process using a catalytic system comprising an iron-based graphitization catalyst should be avoided.

Therefore the present inventors have successfully produced iron-free supported catalyst and MWCNT's using said iron-free supported catalysts, yet they came to the conclusion that the dispersion mediums, disclosed in the prior art, are not sufficient to efficiently disperse the MWCNT's prepared from said iron-free catalysts, said MWCNT's comprising iron-free catalyst remnants.

Due to a longer length of the MWCNT's prepared from iron-free catalysts, and the resulting nano- and microstructures formed, the dispersion in N-methylpyrrolidone comprising polyvinylpyrrolidone creates gel-like highly viscous dispersions, which are very difficult to process, i.e. good homogeneity is hardly obtained and application on the electrode surface for lithium battery applications is barely practicable.

## Aim of the Invention

The aim of the present invention is to disclose a dispersion medium for smoothly dispersing MWCNT's prepared in a process involving iron-free catalysts for a method for the preparation of the MWCNT dispersion, as well as its use in batteries.

## Summary of the invention

The present invention discloses a carbon nanotube dispersion comprising:

- multi-walled carbon nanotubes, comprising between 0.1 and 13% by weight of iron-free catalytic remnants, said remnants comprising one or more iron-free metal oxide compound(s) of at least three metals selected from the group consisting of aluminum, vanadium, cobalt and molybdenum;
- an amide-based solvent;
- polyvinylpyrrolidone; and
- an amine-based compound.

Preferred embodiments of the present invention disclose one or more of the following features:

- the amine-based compound is selected from the group consisting of an aliphatic amine, an amino acid, an alkanolamine, and mixtures thereof;
- the amine- based compound is at least one alkanolamine of the formula:

$$NH_2 - CR1,R2 - CH,R2 - (CH_2)_n - OH$$

- wherein
- R1 is a methyl, ethyl, propyl or butyl group;
- R2 is hydrogen, a methyl, ethyl, propyl or butyl group;
- n is an integer of from 0 to 3;

- the alkanolamine is selected from the group consisting of 2-amino-2-methyl-1-propanol, 2-amino-2-methyl-1-butanol, 3-amino-3-methyl-1-butanol, 3-amino-2-methyl-1-butanol, 4-amino-4-methyl -1-pentanol and mixtures thereof;
- the alkanolamine is 2-amino-2-methyl-1-propanol;
- the amide-based solvent is selected from the group consisting of dimethylformamide, diethylformamide, dimethylacetamide, N-methyl-2-pyrrolidone and mixtures thereof;
- the amide-based solvent is N-methyl-2-pyrrolidone;
- the carbon nanotube dispersion comprises:

  - between 2 and 6% by weight of iron-free catalyst residues comprising multi-walled carbon nanotubes;
  - between 0.01 and 2% by weight of polyvinylpyrrolidone;
  - between 0.1 and 2% by weight of amine-based compound;

  based on the total weight of amide-based solvent, iron-free catalyst residues comprising multi-walled carbon nanotubes, amine-based compound and polyvinylpyrrolidone, where the sum of the weight percentages of amide-based solvent, iron-free catalyst residues comprising multi-walled carbon nanotubes, amine-based compound and polyvinylpyrrolidone, equals to 100% by weight;
- the carbon nanotube dispersion is characterized in that the weight ratio of:

  - polyvinylpyrrolidone over iron-free catalyst residues comprising multi-walled carbon nanotubes is comprised between $2.5 \ 10^{-4}$ and $4 \ 10^{-1}$;
  - amine-based compound over iron-free catalyst residues comprising multi-walled carbon nanotubes is comprised between $2.5 \ 10^{-4}$ and $4 \ 10^{-1}$; and
  - amine-based compound over polyvinylpyrrolidone is comprised between $1 \ 10^{-3}$ and 1,320;

- the carbon nanotube dispersion is characterized by a complex viscosity at 0.2% deformation, as obtained from amplitude oscillatory sweep tests with from 0.1 to 100% deformation at a fixed frequency of 1Hz, at 25°C, comprised between 10 and 1,500 Pa.s.
- the carbon nanotube dispersion is characterized in that the dispersed iron-free catalyst residues comprising multi-walled carbon nanotubes aggregates have a D90 equal to or less than 15 µm, as measured by a Malvern Mastersizer M3000, D90 representing the equivalent spherical diameter where 90% by volume of the aggregates lies below.

The present invention further discloses a method for the production of the MWCNT dispersion comprising the steps of:

- forming a mixture of amide-based solvent, the amine-based compound and polyvinylpyrrolidone by mixing for at least 10 minutes in a dispersion device;
- slowly adding a first part comprising between 20 and 70% of the total amount of iron-free catalyst residues comprising multi-walled carbon nanotubes, while mixing for at least 20 minutes;
- turning off the mixing allowing trapped air to be removed;
- slowly adding a second part comprising between 70 and 20% of the total amount of iron-free catalyst residues comprising multi-walled carbon nanotubes while dispersing for at least 20 minutes till the dispersion becomes shiny and no aggregates are observed by the naked eye and a D90 equal to or less than 15 µm, as measured by a Malvern Mastersizer M3000, is obtained;
- turning off the mixing.

A preferred embodiment of the method relates to the dispersing device comprising a bead mill with spherical beads having a diameter comprised between 0.7 and 1.0 mm, preferably between 0.7 and 0.9 mm.

The present invention further discloses an electrode comprising the carbon nanotube dispersion and an electrode active material.

The present invention further discloses a battery electrode mixture layer comprising the carbon nanotube dispersion formed into a layer, characterized by a surface resistivity of less than 1,000 Ohm/square, as measured by a Keithley 2700 Multimeter in a 250 $\mu$m film, obtained from coating the dispersion on a polyethylene terephthalate film and evaporating the solvent.

## Detailed Description of the Invention

The present invention discloses a multi-walled carbon nanotube dispersion having excellent viscosity, dispersibility, and storage stability and providing a cell electrode composite layer having uniform and satisfactory coating film properties and low electrode plate resistance; said multi-walled carbon nanotube dispersion comprising:

- multi-walled carbon nanotubes,
- an amide-based solvent
- polyvinylpyrrolidone; and
- an amine-based compound.

The multi-walled carbon nanotubes (MWCNT's) of the present invention are obtained from a process using an iron-free supported catalysts and, as a result, still comprise catalyst remnants (also called catalyst residues).

The MWCNT's comprise between 0.1 and 13% by weight, preferably less than 10 % by weight of catalyst remnants, said remnants comprising metal compounds of at least two metals selected from the IUPAC group 4, 5, 6, 7, 9, 10, 11 and 13.

More specifically the multi-walled carbon nanotubes comprise catalyst remnants, said remnants comprising metal compounds of at least three metals selected from the group consisting of aluminum, cobalt, molybdenum and vanadium.

The MWCNT's of the present invention are substantially free of iron. By substantially free, the present invention means less than 150 ppm, preferably less than 100 ppm, more preferably less than 50 ppm, most preferably less than 10 ppm.

The inventors have observed that MWCNT's prepared from iron-free supported catalysts are longer and present a different aspect ratio and particular nano- and microstructures when compared to MWCNT's prepared from iron-comprising supported catalysts.

These differences result in a more difficult dispersion process, and in dispersions with higher viscosity when said dispersions are prepared from current dispersion mediums.

The dispersion medium of the present invention comprises a polar amide based solvent selected from the group consisting of dimethylformamide, diethylformamide, dimethylacetamide, N-methyl-2-pyrrolidone and mixtures thereof.

Preferably the polar amide based solvent of the dispersion medium of the present invention is N-methyl-2-pyrrolidone.

Polyvinylpyrrolidone for being used in the dispersion medium of the present invention is characterized by a K-value comprised between K-12 and K-90, more preferably between K-15 and K-80.

The amine-based compound for being used in the dispersion medium of the present invention is selected from the group consisting of an aliphatic primary amine, an aliphatic secondary amine, an aliphatic tertiary amine, an amino acid, an alkanolamine, and mixtures thereof.

Examples of aliphatic primary amines for being used in the dispersion medium of the present invention are ethylamine, octylamine, laurylamine, myristylamine, stearylamine, and oleylamine.

Examples of aliphatic secondary amines for being used in the dispersion medium of the present invention are diethylamine, dibutylamine, and distearylamine.

Examples of aliphatic tertiary amines for being used in the dispersion medium of the present invention are triethylamine, dimethyloctylamine, dimethyldecylamine, dimethyllaurylamine, dimethylmyristylamine, dimethylpalmitylamine, dimethylstearylamine, dimethylbehenylamine, dilaurylmonomethylamine, and trioctylamine,

Examples amino acids for being used in the dispersion medium of the present invention are alanine, methionine, proline, serine, asparagine, glutamine, lysine, arginine, histidine, aspartic acid, glutamic acid, and cysteine.

Preferably the dispersion medium of the present invention comprises an alkanolamine of the formula:

$$NH_2 - CR1,R2 - CH,R2 - (CH_2)_n - OH$$

wherein

- R1 is a methyl, ethyl, propyl or butyl group;
- R2 is hydrogen, a methyl, ethyl, propyl or butyl group;
- n is an integer of from 0 to 3.

More preferably, the dispersion medium of the present invention comprises an alkanolamine selected from the group consisting of 2-amino-2-methyl-1-propanol, 2-amino-2-methyl-1-butanol, 3-amino-3-methyl-1-butanol, 3-amino-2-methyl-1-butanol, 4-amino-4-methyl -1-pentanol and mixtures thereof.

Most preferably, the dispersion medium of the present invention comprises 2-amino-2-methyl-1-propanol.

Preferably, the dispersion medium of the present invention comprises N-methyl-2-pyrrolidone, polyvinylpyrrolidone K30 and 2-amino-2-methyl-1-propanol.

Preferably, the dispersion medium of the present invention comprises:

- at least 92% by weight, more preferably at least 94% by weight, most preferably at least 95% by weight; and 99.9% by weight or less, preferably 99% by weight or less, most preferably 98.5% by weight or less of N-methyl-2-pyrrolidone;
- at least 0.01% by weight, more preferably at least 0.05% by weight, most preferably at least 0.1% by weight; and 2% by weight or less, preferably 1.7% by weight or less, most preferably 1.4% by weight or less of polyvinylpyrrolidone;
- at least 0.1% by weight, more preferably at least 0.15% by weight, most preferably at least 0.2% by weight; and 2% by weight or less, preferably 1.8% by weight or less, most preferably 1.5% by weight or less of amine-based compound;

The MWCNT's of the present invention are prepared using iron-free catalysts.

Preferably, the iron-free supported catalyst is an iron-free two-component catalyst or a three-component supported catalyst, the support comprising aluminum oxide ($Al_2O_3$) and/or aluminum hydroxide ($Al(OH)_3$) and aluminum oxide hydroxide ($AlO(OH)$) as confirmed by X-Ray diffraction.

Preferably, the iron-free two-component catalyst comprises a first cobalt-based catalytic component and a second vanadium-based catalytic component, both preferably in the form of oxide.

Preferably, the iron-free three-component graphitization catalyst comprises a first cobalt-based catalytic component, a second vanadium-based catalytic component and a third molybdenum-based catalytic component, all preferably in the form of oxide.

The aluminum-based support of both, the two-component and the three-component supported catalysts, comprises at least 30% by weight of aluminum oxide hydroxide.

The two-component and the three-component supported catalysts have a purity of at least 95%.

For the preparation of MWCNT, the supported iron-free catalyst is brought into contact with a carbon source in the gas phase.

The use of the supported catalyst allows for growth of the carbon nanotubes by chemical vapor synthesis through decomposition of the carbon source, leading to the production of the carbon nanotube aggregate.

Any carbon source that can supply carbon and can exist in the gas phase at a temperature of 300°C or more may be used without particular limitation for the chemical vapor synthesis. The gas-phase carbonaceous material is preferably a compound consisting of up to 6 carbon atoms, more preferably a compound consisting of up to 4 carbon atoms.

The iron-free catalyst according to the present invention allows for the production of MWCNT at a carbon yield comprised between 800 and 2500% by weight, preferably between 1000 and 2400% by weight, more preferably between 1100 and 2300% by weight.

The carbon yield, in % by weight, is defined as:

$$100 \ (m_{tot} - m_{cat}) \ / \ m_{cat}$$

wherein $m_{tot}$ is the total weight of product after reaction and $m_{cat}$ is the weight of the catalyst used for the reaction.

The MWCNT's obtained by the above method comprise between 0.1 and 13 % by weight, preferably 1 and 10 % by weight of the catalyst residues.

The weight percentage of catalyst residues is determined by thermogravimetric analysis or by calcination in air.

The MWCNT dispersion is prepared in a dispersion device generally used for dispersing pigments and the like.

Examples of a dispersion device include for instance homomixers, planetary mixers, colloid mills, cone mills, ball mills, sand mills, pearl mills, wet jet mills, roll mills and bead mills.

Preferably, the dispersion device comprises a bead mill with spherical beads having a diameter comprised between 0.7 and 1.0 mm, preferably between 0.7 and 0.9 mm.

In the method for preparing the MWCNT dispersion, the quantities (or weight percentages) of MWCNT's are quantities (or weight percentages) of MWCNT's comprising between 0.1 and 13% by weight of iron-free catalyst residues, further referred to as iron-free catalyst residues comprising MWCNT. The catalyst residues are intrinsically present in the MWCNT's as a result of their preparation. Thus, for a dispersion of 2% by weight of iron-free catalyst residues comprising MWCNT, comprising between 0.1 and 13% by weight of iron-free catalyst residues, said dispersion will comprise between 1.998 and 1.74% by weight of pure MWCNT's.

First, a dispersion medium is prepared by mixing for at least 10 minutes, preferably for at least 20 minutes, the amide-based solvent, the amine-based compound and polyvinylpyrrolidone in a dispersion device, said mixture comprising:

- at least 92% by weight, more preferably at least 94% by weight, most preferably at least 95% by weight; and 99.9% by weight or less, preferably 99% by weight or less, most preferably 98.5% by weight or less of amide-based solvent;
- at least 0.01% by weight, more preferably at least 0.05% by weight, most preferably at least 0.1% by weight; and 2% by weight or less, preferably 1.7% by weight or less, most preferably 1.4% by weight or less of polyvinylpyrrolidone;
- at least 0.1% by weight, more preferably at least 0.15% by weight, most preferably at least 0.2% by weight; and 2% by weight or less, preferably 1.8% by weight or less, most preferably 1.5% by weight or less of amino-based compound;

the total of amide-based solvent, polyvinylpyrrolidone and amine-based component being 100% by weight.

Then, 2% by weight of iron-free catalyst residues comprising MWCNT's are slowly added while mixing for at least 20 minutes, preferably for at least 30 minutes.

Subsequently, the mixing is switched off to allow the trapped air to be removed.

A further amount of iron-free catalyst residues comprising MWCNT's, up to 6% by weight, is slowly added while continuing the mixing for at least 20 minutes, preferably for at least 30 minutes, until a shiny homogeneous dispersion free of visible aggregates is obtained.

The amounts of amide-based solvent, polyvinylpyrrolidone, amine-based compound and iron-free catalyst residues comprising MWCNT's are selected in such a way that the dispersion of iron-free catalyst residues comprising MWCNT's is characterized in that the weight ratio of:

- polyvinylpyrrolidone over iron-free catalyst residues comprising MWCNT's is comprised between $2.5 \cdot 10^{-4}$ and $4 \cdot 10^{-1}$, preferably between $6.5 \cdot 10^{-3}$ and $3.5 \cdot 10^{-1}$, more preferably between $1.2 \cdot 10^{-1}$ and $3 \cdot 10^{-1}$;
- amine-based compound over iron-free catalyst residues comprising MWCNT's is comprised between $2.5 \cdot 10^{-4}$ and $4 \cdot 10^{-1}$, preferably between $6.5 \cdot 10^{-3}$ and $3.5 \cdot 10^{-1}$, more preferably between $1.2 \cdot 10^{-1}$ and $3 \cdot 10^{-1}$; and
- amine-based compound over polyvinylpyrrolidone is comprised between $1 \cdot 10^{-3}$ and 1,320, preferably between $1 \cdot 10^{-2}$ and 500, more preferably between $5 \cdot 10^{-1}$ and 2.

In the present invention, by mixing is meant dispersing and homogenizing.

The dispersion of iron-free catalyst residues comprising MWCNT's is considered as being completed when the dispersed iron-free catalyst residues comprising MWCNT aggregates are characterized by a D90 equal to or less than 15 μm, as measured by a Malvern Mastersizer M3000 wherein D90 represents the equivalent spherical diameter where 90% by volume of the aggregates lies below.

The particle size distribution of dispersions is measured via laser diffraction technique using a Malvern Mastersizer M3000. The samples are diluted in a water-based fluid carrier after automatized cleaning and verification of the background from the particle analyzer software. Once the obscuration is within the limits, 5 measurements are recorded and averaged. Measurements are done at ambient temperature

The dispersion of iron-free catalyst residues comprising MWCNT's is characterized by a complex viscosity at 0.2% deformation, as obtained from amplitude oscillatory sweep tests with from 0.1 to 100% deformation at a fixed frequency of 1Hz, of 10 Pa.s or more. Preferably, the complex viscosity at 2% deformation is less than 1,500 Pa.s, more preferably less than 1,000 Pa.s, most preferably less than 500 Pa.s, as measured on a control stress rheometer Anton Paar MCR-301 at 25°C

In order to assess the performance of the iron-free catalyst residues comprising MWCNT dispersion of the present invention in either cathode or anode of batteries, in particular lithium-ion batteries, the resistivity is measured as surface resistivity in a film of 250 microns. A dispersion of iron-free catalyst residues comprising MWCNT's is coated over the PET (polyethylene terephthalate) and solvent is evaporated at 80°C in an oven before measurements. Afterwards, a Keithley 2700 Multimeter is employed to measure 6 points on the surface of the film and make the average.

## Examples

The following illustrative examples are merely meant to exemplify the present invention but they are not intended to limit or otherwise define the scope of the present invention.

Example 1: *Synthesis of the iron-free three-component graphitization catalyst*

5000 parts by weight of water, at 60°C, comprising 277 parts by weight of citric acid and 387 parts by weight of malic acid, were added to 340 parts by weight of ammonium metavanadate and 64 parts by weight of ammonium heptamolybdate tetrahydrate, and mixed during 15 minutes using a paddle mixer, resulting in a first aqueous solution.

Similarly, 5000 parts by weight of water, at 60°C, were added to 4931 parts by weight of cobalt(II) acetate tetrahydrate and mixed during 15 minutes using a paddle mixer, resulting in a second aqueous solution.

The second aqueous solution was added to the first aqueous solution and mixed during 15 minutes using a paddle mixer.

To the mixture of the first and the second aqueous solution, 13333 parts by weight of aluminum hydroxide (Apyral® 200 SM - Nabaltec), with specific surface area (BET) of 15 m$^2$/g, was added and mixed during 15 minutes using a paddle mixer.

The paste thus obtained was then transferred to ceramic crucibles with a large opening and subjected to a heating process, wherein the paste was heated to 120°C with a heating gradient of 2°C/min and an air flow of 0.5 m$^3$/h and maintained at 120°C for 5 hours.

After 5 hours at 120°C, the paste was further heated to a temperature of 400°C with a heating gradient of 2°C/min. and maintained at 400°C for 5 hours while maintaining an air flow of 0.5 m$^3$/h.

The solid material thus obtained was cooled down to room temperature and ground, by means of a conical grinder, to a powder characterized by a volume median particle diameter ($D_{50}$) of 58 $\mu$m.

The iron-free supported catalyst is characterized by

- a mass ratio of cobalt to aluminum between 2.53 10$^{-1}$;
- a mass ratio of vanadium to aluminum between 3.20 10$^{-2}$;
- a mass ratio of molybdenum to aluminum between 7.54 10$^{-3}$;
- a mass ratio of cobalt to the combined mass of vanadium and molybdenum of 6.4

Example 2 : *Synthesis of MWCNT*

1.0 g of the iron-free supported graphitization catalyst of example 1 was spread in a quartz vessel which subsequently was brought in the center of a quartz tube-type reactor with an inlet and an outlet.

The center of the quartz tube reactor where the vessel comprising the catalyst is located was heated to a temperature of 700°C.

Subsequently, ethylene gas, nitrogen and hydrogen were allowed to flow through the quartz tube reactor at a flow rate of 1.744 l/min (C$_2$H$_4$); 0.857 l/min (N$_2$) and 0.286 l/min (H$_2$) during 20 minutes.

The MWCNT is produced at a carbon yield of 2076 % by weight and comprises 5% by weight of catalyst remnants.

Example 3: *Preparation of the MWCNT dispersion*

MWCNT dispersions, in N-methyl-2-pyrrolidone, comprising 3% by weight of iron-free catalyst residues comprising MWCNT's of example 2 were prepared according to the formulations as in table 1,

Table 1

| Ex. | %wt PVP | amine | %wt amine | Complex Viscosity (Pa.s) | D90 | Surface Resistivity (Ω/sq) |
|-----|---------|-------|-----------|--------------------------|-----|----------------------------|
| 4 | 0.45 | AMP | 0.375 | 53.9 | 14.4 | 983 |
| 5 | 0.45 | N-octylamine | 0.375 | 345 | 22 | 855 |
| 6 | 0.75 | AMP | 0.75 | 16 | 5.1 | 990 |
| 7 | 0.45 | Ethanolamine | 0.375 | 300 | 15 | 890 |

In table 1, AMP stands for 2-amino-2-methyl-1-propanol.

In table 1, the MWCNT dispersions were prepared in a pilot production line operating in circulation mode using a bead mill with beads of 0.8 mm diameter and a premixing equipment consisting of a tank with a mixer.

The iron-free catalyst residues comprising MWCNT dispersions of examples 4, 5 and 7 were characterized by a D90 of 14.4 $\mu$m (amine-based compound: 2-amino-2-methyl-1-propanol), 22 $\mu$m (amine-based compound: n-octylamine) and 15 $\mu$m (amine-based compound ethanolamine) respectively, as measured by a Malvern Mastersizer M3000. By way of comparison, the MWCNT dispersion, prepared under the same dispersion conditions with a comparable energy input, but not comprising the amine-based compound, is characterized by a D90 of 19.1 $\mu$m.

The MWCNT dispersions of examples 4, 5 and 7 were tested for surface resistivity. Surface resistivity values of 855 $\Omega$/sq (amine-based compound: n-octylamine), of 983 $\Omega$/sq (amine-based compound: 2-amino-2-methyl-1-propanol) and of 890 $\Omega$/sq (amine-based compound: ethanolamine) were respectively measured. By way of comparison, the surface resistivity for the MWCNT dispersion, not comprising the amine-based compound, equals 911.8 $\Omega$/sq. According to the inventors, the surface resistivity values for the n-octylamine comprising dispersion medium, for the 2-amino-2-methyl-1-propanol comprising dispersion medium , for the ethanolamine comprising dispersion medium and for an identical dispersion medium but not comprising an amine-based compound, are comparable given the experimental error on surface resistivity measurements.

Increasing the polyvinylpyrrolidone (PVP-content) and the 2-amino-2-methyl-1-propanol (AMP-content) has a huge effect on the complex viscosity, and on D90, while surface resisitivity remains substantially unchanged within experimental error, as clearly appears from example 6.

The benefits of the addition of an amine-based compound and in particular of the alkanolamines, as claimed in the present invention, for complex viscosity, D90 and surface resistivity are clearly demonstrated.

## Claims

1.  A carbon nanotube dispersion comprising:

    - multi-walled carbon nanotubes, comprising between 0.1 and 13% by weight of iron-free catalytic remnants, said remnants comprising one or more iron-free metal oxide compound(s) of at least three metals selected from the group consisting of aluminum, vanadium, cobalt and molybdenum;
    - an amide-based solvent selected from the group consisting of dimethylformamide, diethylformamide, dimethylacetamide, N-methyl-2-pyrrolidone and mixtures thereof;
    - polyvinylpyrrolidone; and
    - an amine-based compound selected from the group consisting of an aliphatic amine, an amino acid, an alkanolamine, and mixtures thereof.

2.  The carbon nanotube dispersion according to claim 1 wherein the amine- based compound is at least one alkanolamine of the formula:

    $$NH_2 - CR1,R2 - CH,R2 - (CH_2)_n - OH$$

    - wherein
    - R1 is a methyl, ethyl, propyl or butyl group;
    - R2 is hydrogen, a methyl, ethyl, propyl or butyl group;
    - n is an integer of from 0 to 3.

3.  The carbon nanotube dispersion according to any of claims 1 or 2, wherein the alkanolamine is selected from the group consisting of 2-amino-2-methyl-1-propanol, 2-amino-2-methyl-1-butanol, 3-amino-3-methyl-1-butanol, 3-amino-2-methyl-1-butanol, 4-amino-4-methyl -1-pentanol and mixtures thereof.

4.  The carbon nanotube dispersion according to any of claims 1 to 3, wherein the alkanolamine is 2-amino-2-methyl-1-propanol.

5.  The carbon nanotube dispersion according to any of claims 1 to 4, wherein the amide-based solvent is N-methyl-2-pyrrolidone.

6.  The carbon nanotube dispersion according to any of claims 1 to 5, comprising:

    - between 2 and 6% by weight of iron-free catalyst residues comprising multi-walled carbon nanotubes;
    - between 0.01 and 2% by weight of polyvinylpyrrolidone;
    - between 0.1 and 2% by weight of amine-based compound;

    based on the total weight of amide-based solvent, iron-free catalyst residues comprising multi-walled carbon nanotubes, amine-based compound and polyvinylpyrrolidone, where the sum of the weight percentages of amide-based solvent, iron-free catalyst residues comprising multi-walled carbon nanotubes, amine-based compound and polyvinylpyrrolidone, equals to 100% by weight.

7. The carbon nanotube dispersion according to any of claims 1 to 6, wherein the weight ratio of:

- polyvinylpyrrolidone over iron-free catalyst residues comprising multi walled carbon nanotubes is comprised between $2.5 \ 10^{-4}$ and $4 \ 10^{-1}$;
- amine-based compound over iron-free catalyst residues comprising multi-walled carbon nanotubes is comprised between $2.5 \ 10^{-4}$ and $4 \ 10^{-1}$; and
- amine-based compound over polyvinylpyrrolidone is comprised between $1 \ 10^{-3}$ and 1,320.

8. The carbon nanotube dispersion according to any of claims 1 to 7, being **characterized by** a complex viscosity at 0.2% deformation, as obtained from amplitude oscillatory sweep tests with from 0.1 to 100% deformation at a fixed frequency of 1Hz, at 25°C, comprised between 10 and 1,500 Pa.s.

9. The carbon nanotube dispersion according to any of claims 1 to 8, wherein the dispersed iron-free catalyst residues comprising multi-walled carbon nanotubes aggregates are **characterized by** a D90 equal to or less than 15 $\mu$m, as measured by a Malvern Mastersizer M3000, D90 representing the equivalent spherical diameter where 90% by volume of the aggregates lies below.

10. A method for producing the carbon nanotube dispersion according to any of the claims 1 to 9 comprising the steps of:

a. forming a mixture of amide-based solvent, the amine-based compound and polyvinylpyrrolidone by mixing for at least 10 minutes in a dispersion device;
b. slowly adding a first part comprising between 20 and 70% of the total amount of iron-free catalyst residues comprising multi-walled carbon nanotubes, while mixing for at least 20 minutes;
c. turning off the mixing allowing trapped air to be removed;
d. slowly adding a second part comprising between 70 and 20% of the total amount of iron-free catalyst residues comprising multi-walled carbon nanotubes while dispersing for at least 20 minutes till the dispersion becomes shiny and no aggregates are observed by the naked eye and a D90 equal to or less than 15 $\mu$m, as measured by a Malvern Mastersizer M3000, is obtained;
e. turning off the mixing.

11. The method according to claim 10 wherein the dispersing device comprises a bead mill with spherical beads having a diameter comprised between 0.7 and 1.0 mm, preferably between 0.7 and 0.9 mm.

12. An electrode comprising a carbon nanotube dispersion according to claims 1 to 9 and an electrode active material.

13. A battery electrode mixture layer comprising the carbon nanotube dispersion for an electrode according to claim 12 formed into a layer, **characterized by** a surface resistivity of less than 1,000 Ohm/square, as measured by a Keithley 2700 Multimeter in a 250 $\mu$m film, obtained from coating the dispersion of claims 1 to 11 on a polyethylene terephthalate film and evaporating the solvent.

**Patentansprüche**

1. Kohlenstoffnanoröhrchen-Dispersion, umfassend:

- mehrwandige Kohlenstoffnanoröhrchen, die zwischen 0,1 und 13 Gew.-% eisenfreier katalytischer Reste umfassen, wobei die Reste eine oder mehrere eisenfreie Metall-Oxidverbindung(en) aus mindestens drei Metallen umfassen, ausgewählt aus der Gruppe, die aus Aluminium, Vanadium, Kobalt und Molybdän besteht;
- ein Lösungsmittel auf Amidbasis, ausgewählt aus der Gruppe, die aus Dimethylformamid, Diethylformamid, Dimethylacetamid, N-Methyl-2-pyrrolidon und Gemischen davon besteht;
- Polyvinylpyrrolidon; und
- eine Verbindung auf Aminbasis, ausgewählt aus der Gruppe, die aus einem aliphatischen Amin, einer Aminosäure, einem Alkanolamin und Gemischen davon besteht.

**2.** Kohlenstoffnanoröhrchen-Dispersion nach Anspruch 1, wobei die Verbindung auf Aminbasis mindestens ein Alkanolamin der folgenden Formel ist:

$$NH_2 - CR1,R2 - CH,R2 - (CH_2)_n - OH$$

- wobei
- R1 eine Methyl-, Ethyl-, Propyl- oder Butylgruppe ist;
- R2 Wasserstoff, eine Methyl-, Ethyl-, Propyl- oder Butylgruppe ist;
- n eine ganze Zahl von 0 bis 3 ist.

**3.** Kohlenstoffnanoröhrchen-Dispersion nach einem der Ansprüche 1 oder 2, wobei das Alkanolamin aus der Gruppe ausgewählt ist, die aus 2-Amino-2-methyl-1-propanol, 2-Amino-2-methyl-1-butanol, 3-Amino-3-methyl-1-butanol, 3-Amino-2-methyl-1-butanol, 4-Amino-4-methyl-1-pentanol und Gemischen davon besteht.

**4.** Kohlenstoffnanoröhrchen-Dispersion nach einem der Ansprüche 1 bis 3, wobei das Alkanolamin 2-Amino-2-methyl-1-propanol ist.

**5.** Kohlenstoffnanoröhrchen-Dispersion nach einem der Ansprüche 1 bis 4, wobei das Lösungsmittel auf Amidbasis N-Methyl-2-pyrrolidon ist.

**6.** Kohlenstoffnanoröhrchen-Dispersion nach einem der Ansprüche 1 bis 5, umfassend:

- zwischen 2 und 6 Gew.-% eisenfreier Katalysatorreste, die mehrwandige Kohlenstoffnanoröhrchen umfassen;
- zwischen 0,01 und 2 Gew.-% Polyvinylpyrrolidon;
- zwischen 0,1 und 2 Gew.-% einer Verbindung auf Aminbasis;

bezogen auf das Gesamtgewicht des Lösungsmittels auf Amidbasis, der eisenfreien Katalysatorreste, die mehrwandige Kohlenstoffnanoröhrchen umfassen, einer Verbindung auf Aminbasis und Polyvinylpyrrolidon, wobei die Summe der Gewichtsprozente von dem Lösungsmittel auf Amidbasis, den eisenfreien Katalysatorresten, die mehrwandige Kohlenstoffnanoröhrchen umfassen, der Verbindung auf Aminbasis und dem Polyvinylpyrrolidon, gleich 100 Gew.-% ist.

**7.** Kohlenstoffnanoröhrchen-Dispersion nach einem der Ansprüche 1 bis 6, wobei das Gewichtsverhältnis:

- von Polyvinylpyrrolidon zu den eisenfreien Katalysatorresten, die mehrwandige Kohlenstoffnanoröhrchen umfassen, zwischen $2{,}5 \cdot 10^{-4}$ und $4 \cdot 10^{-1}$ liegt;
- von der Verbindung auf Aminbasis zu den eisenfreien Katalysatorresten, die mehrwandige Kohlenstoffnanoröhrchen umfassen, zwischen $2{,}5 \cdot 10^{-4}$ und $4 \cdot 10^{-1}$ liegt; und
- von der Verbindung auf Aminbasis zu dem Polyvinylpyrrolidon zwischen $1 \cdot 10^{-3}$ und 1320 liegt.

**8.** Kohlenstoffnanoröhrchen-Dispersion nach einem der Ansprüche 1 bis 7, **gekennzeichnet durch** eine Komplexviskosität, die bei einer Verformung von 0,2 %, erlangt durch oszillatorischen Amplitudendurchlauf mit einer Verformung bei einer festen Frequenz von 1 Hz bei 25 °C, zwischen 10 und 1.500 Pa.s liegt.

**9.** Kohlenstoffnanoröhrchen-Dispersion nach einem der Ansprüche 1 bis 8, wobei die dispergierten eisenfreien Katalysatorreste, die mehrwandige Kohlenstoffnanoröhrchen-Aggregate umfassen, durch einen D90 von 15 $\mu$m oder weniger gekennzeichnet sind, gemessen mit einem Malvern Mastersizer M3000, wobei D90 den äquivalenten sphärischen Durchmesser darstellt, unter dem 90 Vol.- % der Aggregate liegen.

**10.** Verfahren zum Herstellen der Kohlenstoffnanoröhrchen-Dispersion nach einem der Ansprüche 1 bis 9, welches die folgenden Schritte umfasst:

a. Bilden eines Gemischs aus dem Lösungsmittel auf Amidbasis, der Verbindung auf Aminbasis und dem Polyvinylpyrrolidon durch Mischen während mindestens 10 Minuten in einer Dispergiervorrichtung;
b. langsames Hinzufügen eines ersten Teils, der zwischen 20 und 70 % der Gesamtmenge an eisenfreien Katalysatorresten mit mehrwandigen Kohlenstoffnanoröhrchen umfasst, indem das Gemisch während mindes-

**EP 4 436 922 B1**

tens 20 Minuten gemischt wird;

c. Ausschalten des Mischens, um eingeschlossene Luft zu entfernen;

d. langsames Hinzufügen eines zweiten Teils, der zwischen 70 und 20 % der Gesamtmenge an eisenfreien Katalysatorresten mit mehrwandigen Kohlenstoffnanoröhrchen umfasst, indem das Gemisch während mindestens 20 Minuten dispergiert wird, bis die Dispersion glänzend wird, mit bloßem Auge keine Aggregate zu erkennen sind und ein D90 von 15 μm oder weniger erreicht wird, gemessen mit einem Malvern Mastersizer M3000;

e. Ausschalten des Mischens.

11. Verfahren nach Anspruch 10, wobei die Dispergiervorrichtung eine Perlmühle mit kugelförmigen Perlen umfasst, die einen Durchmesser zwischen 0,7 und 1,0 mm, vorzugsweise zwischen 0,7 und 0,9 mm, aufweisen.

12. Elektrode, die eine Kohlenstoffnanoröhrchen-Dispersion nach einem der Ansprüche 1 bis 9 und ein aktives Elektrodenmaterial umfasst.

13. Batterieelektrode-Gemischschicht, welche die Kohlenstoffnanoröhrchen-Dispersion für eine Elektrode nach Anspruch 12 umfasst, wobei die Dispersion zu einer Schicht geformt ist, die durch einen Oberflächenwiderstand von weniger als 1000 Ohm/Quadrat gekennzeichnet ist, wobei der Oberflächenwiderstand mit einem Multimeter Keithley 2700 in einem Film von 250 μm gemessen wird und die Schicht durch Auftragen der Dispersion von Anspruch 1 bis 11 auf einen Polyethylenterephthalat-Film und Verdampfen des Lösungsmittels erlangt wird.

**Revendications**

1. Dispersion de nanotubes de carbone comprenant :

- des nanotubes de carbone multiparois, contenant entre 0,1 et 13 % en poids de résidus catalytiques exempts de fer, lesdits résidus comprenant un ou plusieurs composés d'oxyde métallique sans fer d'au moins trois métaux choisis dans le groupe constitué par l'aluminium, le vanadium, le cobalt et le molybdène ;
- un solvant à base d'amide choisi dans le groupe constitué par le diméthylformamide, le diéthylformamide, le diméthylacétamide, la N-méthyl-2-pyrrolidone et des mélanges de ceux-ci ;
- de la polyvinylpyrrolidone ; et
- un composé à base d'amine choisi dans le groupe constitué par une amine aliphatique, un acide aminé, une alcanolamine et des mélanges de ceux-ci.

2. Dispersion de nanotubes de carbone selon la revendication 1, dans laquelle le composé à base d'amine est au moins une alcanolamine de la formule suivante :

$$NH_2 - CR1,R2 - CH,R2 - (CH_2)_n - OH$$

- dans laquelle
- R1 est un groupe méthyle, éthyle, propyle ou butyle ;
- R2 est de l'hydrogène, un groupe méthyle, éthyle, propyle ou butyle ;
- n est un nombre entier de 0 à 3.

3. Dispersion de nanotubes de carbone selon l'une quelconque des revendications 1 ou 2, dans laquelle l'alcanolamine est choisie dans le groupe constitué par le 2-amino-2-méthyl-1-propanol, le 2-amino-2-méthyl-1-butanol, le 3-amino-3-méthyl-1-butanol, le 3-amino-2-méthyl-1-butanol, le 4-amino-4-méthyl-1-pentanol et des mélanges de ceux-ci.

4. Dispersion de nanotubes de carbone selon l'une quelconque des revendications 1 à 3, dans laquelle l'alcanolamine est le 2-amino-2-méthyl-1-propanol.

5. Dispersion de nanotubes de carbone selon l'une quelconque des revendications 1 à 4, dans laquelle le solvant à base d'amide est la N-méthyl-2-pyrrolidone.

**13**

## EP 4 436 922 B1

6. Dispersion de nanotubes de carbone selon l'une quelconque des revendications 1 à 5, comprenant :

   - entre 2 et 6 % en poids de résidus de catalyseur sans fer comprenant des nanotubes de carbone multiparois ;
   - entre 0,01 et 2 % en poids de polyvinylpyrrolidone ;
   - entre 0,1 et 2 % en poids de composé à base d'amine ;

   sur la base du poids total du solvant à base d'amide, des résidus de catalyseur sans fer comprenant des nanotubes de carbone multiparois, du composé à base d'amine et de la polyvinylpyrrolidone, la somme des pourcentages en poids du solvant à base d'amide, des résidus de catalyseur sans fer comprenant des nanotubes de carbone multiparois, du composé à base d'amine et de la polyvinylpyrrolidone étant égale à 100 % en poids.

7. Dispersion de nanotubes de carbone selon l'une quelconque des revendications 1 à 6, dans laquelle le rapport en poids :

   - de la polyvinylpyrrolidone sur les résidus de catalyseur sans fer comprenant des nanotubes de carbone multiparois est compris entre $2,5 \cdot 10^{-4}$ et $4 \cdot 10^{-1}$ ;
   - du composé à base d'amine sur les résidus de catalyseur sans fer comprenant des nanotubes de carbone multiparois est compris entre $2,5 \cdot 10^{-4}$ et $4 \cdot 10^{-1}$ ; et
   - le composé à base d'amine sur la polyvinylpyrrolidone est compris entre $1 \cdot 10^{-3}$ et 1 320.

8. Dispersion de nanotubes de carbone selon l'une quelconque des revendications 1 à 7, **caractérisée par** une viscosité complexe à 0,2 % de déformation comprise entre 10 et 1 500 Pa.s, telle qu'obtenue à partir de tests de balayage d'amplitude oscillatoire avec une déformation de 0,1 à 100 % à une fréquence fixe de **1 Hz,** à 25 °C.

9. Dispersion de nanotubes de carbone selon l'une quelconque des revendications 1 à 8, dans laquelle les résidus de catalyseur sans fer dispersés comprenant des agrégats de nanotubes de carbone multiparois sont **caractérisés par** un D90 inférieur ou égal à 15 μm, tel que mesuré par un Malvern Mastersizer M3000, D90 représentant le diamètre sphérique équivalent au-dessous duquel se situent 90 % en volume des agrégats.

10. Procédé de production de la dispersion de nanotubes de carbone selon l'une quelconque des revendications 1 à 9 comprenant les étapes de :

    a. formation d'un mélange de solvant à base d'amide, du composé à base d'amine et de polyvinylpyrrolidone par mélange pendant au moins 10 minutes dans un dispositif de dispersion ;
    b. ajout graduel d'une première partie comprenant entre 20 et 70 % de la quantité totale de résidus de catalyseur sans fer comprenant des nanotubes de carbone multiparois, tout en mélangeant pendant au moins 20 minutes ;
    c. arrêt du mélange permettant d'éliminer l'air emprisonné ;
    d. ajout graduel d'une seconde partie comprenant entre 70 et 20 % de la quantité totale de résidus de catalyseur sans fer comprenant des nanotubes de carbone multiparois tout en dispersant pendant au moins 20 minutes jusqu'à ce que la dispersion devienne brillante, qu'aucun agrégat ne soit observable à l'œil nu et qu'un D90 égal ou inférieur à 15 μm, tel que mesuré par un Malvern Mastersizer M3000, soit obtenu ;
    e. arrêt du mélange.

11. Procédé selon la revendication 10 dans lequel le dispositif de dispersion comprend un broyeur à billes avec des billes sphériques ayant un diamètre compris entre 0,7 et 1,0 mm, de préférence entre 0,7 et 0,9 mm.

12. Électrode comprenant une dispersion de nanotubes de carbone selon les revendications 1 à 9 et un matériau actif d'électrode.

13. Couche de mélange pour électrode de batterie comprenant la dispersion de nanotubes de carbone pour une électrode selon la revendication 12, formée en une couche, **caractérisée par** une résistivité de surface inférieure à 1 000 Ohms/carré, telle que mesurée par un multimètre Keithley 2700 dans un film de 250 μm, obtenue par application de la dispersion selon les revendications 1 à 11 sur un film de téréphtalate de polyéthylène et par évaporation du solvant.

14

**EP 4 436 922 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016514080 A
- CN 104795570 A
- EP 3816103 A1
- US 7682590 A1
- US 2011301251 A1
- JP 2005162877 A
- JP 2008138039 B
- JP 2015072899 A
- EP 3786110 A1